# EUROPÄISCHE PATENTANMELDUNG

(11) **EP 1 736 064 A1**
(43) Veröffentlichungstag der Anmeldung: **27.12.2006**
(21) Anmeldenummer: 06009708.6
(22) Anmeldetag: 11.05.2006
(51) Int. Cl.: A24B 1/04, A24C 5/39, B04C 3/06, B65G 53/60

(54) **Tangentialer Abscheider**

(30) Priorität: 20.06.2005 DE 102005028638
(71) Anmelder: Hauni Maschinenbau AG, 21033 Hamburg (DE)
(72) Erfinder: Koch, Thorsten, 23843 Bad Oldesloe (DE); Denker, Wolfgang, 21039 Hamburg (DE)
(74) Vertreter: Seemann, Ralph

(57) **Zusammenfassung**

Die Erfindung betrifft einen tangentialen Luft-Tabakgut-Abscheider (1), umfassend wenigstens eine Zuleitung (5) für einen Luft-Tabakgut-Strom (4), wenigstens eine Austrittsöffnung (7) für das abgetrennte Tabakgut (2) und wenigstens eine Luftaustrittsvorrichtung (8, 8'). Die Erfindung betrifft ferner eine Maschine der Tabak verarbeitenden Industrie, insbesondere Zigarettenherstellungsmaschine.

Der erfindungsgemäße Luft-Tabakgut-Abscheider (1) ist dadurch weitergebildet, dass die wenigstens eine Luftaustrittsvorrichtung (8, 8') als in den tangentialen Abscheider (1) hinein ragendes und im tangentialen Abscheider (1) endendes Rohr ausgebildet ist.

## Beschreibung

Die Erfindung betrifft einen tangentialen Luft-Tabakgut-Abscheider, umfassend wenigstens eine Zuleitung für einen Luft-Tabakgut-Strom, wenigstens eine Austrittsöffnung für das abgetrennte Tabakgut und wenigstens eine Luftaustrittsvorrichtung. Die Erfindung betrifft ferner eine Maschine der Tabak verarbeitenden Industrie, insbesondere eine Zigarettenherstellungsmaschine.

Im Tabakaufbereitungsprozess wird des Öfteren Tabak von Förderluft z.B. nach der Behandlung durch einen Stromtrockner getrennt. Dazu kann ein Tangentialabscheider verwendet werden.

Auch für die Herstellung von Zigaretten werden Zigarettenherstellungsmaschinen aus einem Lagerbehälter bzw. einem Tabakvorrat über ein Leitungssystem mit Tabak versorgt. Der Tabak wird durch Ansaugen eines Luftstromes transportiert, der von einem Sauggebläse erzeugt wird und durch den Eintrittsbereich der Herstellungsmaschine in das Leitungssystem wirkt. Der Eintrittsbereich der Maschine enthält im Allgemeinen einen Abscheider.

Die dem Transport dienende Luft muss vom Tabakfaser- bzw. Tabakgut-Strom getrennt werden, bevor das Tabakgut bzw. die Tabakfasern in die Zigarettenherstellungsmaschine eintreten. Dieser Trennvorgang wird im Abscheider ausgeführt. Nach Durchgang durch den Abscheider gelangt das Tabakgut, von der Luft befreit, in einen Verteiler der Herstellungsmaschine. Die Regelung der zur Zigarettenherstellungsmaschine gelieferten Tabakmenge wird zwischen einem Sauggebläse und dem Luftaustritt des Abscheiders mittels einer Klappe realisiert, indem die Menge der Transportluft für den Tabak geregelt wird.

Aus den europäischen Patentschriften EP 0 501 910 B1 und EP 0 655 402 B1 sind tangentiale Luft-Tabakgut-Abscheider mit zwei gegenüberliegenden Luft-Absaugleitungen bekannt. Die Abscheider verfügen über langsam rotierende Saugtrommeln, bei denen die Absaugwirkung durch eine Anordnung von Sauglöchern oder Saugschlitzen entsteht, deren Querschnitt in axialer Richtung der Saugtrommeln variiert. Über die Verteilung der Querschnitte der Saugöffnungen in den Saugtrommeln wird die Verteilung der Luftströme eingestellt, von der der Abscheidegrad des Abscheiders abhängt.

In beiden Patentschriften ist die Saugtrommel von einem ebenfalls langsam rotierenden hohlen Zylinder mit kreisrundem Querschnitt bestehend aus einem sehr feinen metallenen Gitter umgeben, die als Sieb dienen und einen Verlust von Tabakgut durch Einsaugen in die Saugtrommel verhindern. Feiner Tabakstaub gelangt jedoch mit der abgesaugten Luft durch die Siebtrommel in die Luft-Absaugleitungen.

Derartige Siebtrommeln sind rotierend oder stillstehend mit oder ohne Reinigung ausgeführt. Siebtrommeln ohne Reinigung können verschmutzen. Die Reinigung stillstehender Siebtrommeln auf dem gesamten Umfang ist schwierig. Bei rotierenden Siebtrommeln ist die Abdichtung des Umfangs, insbesondere bei hohen Temperaturen, problematisch. Weiterhin kann es erforderlich sein, abgesaugte Luft, in der feiner Tabakstaub enthalten ist, mittels eines Zyklon-Abscheiders nachträglich zu entstauben.

Ausgehend von diesem Stand der Technik ist es Aufgabe der vorliegenden Erfindung, einen tangentialen Luft-Tabakgut-Abscheider zu schaffen, bei dem eine gleichmäßige Verteilung des Tabakguts ermöglicht wird und bei dem sich die Problematik der Reinigung einer Siebtrommel sowie einer nachträglichen Reinigung der abgesaugten Luft nicht stellt.

Die der Erfindung zugrunde liegende Aufgabe wird gelöst durch einen tangentialen Luft-Tabakgut-Abscheider, umfassend wenigstens eine Zuleitung für einen Luft-Tabakgut-Strom, wenigstens eine Austrittsöffnung für das abgetrennte Tabakgut und wenigstens eine Luftaustrittsvorrichtung, wobei die wenigstens eine Luftaustrittsvorrichtung als in den tangentialen Abscheider hinein ragendes und im tangentialen Abscheider endendes Rohr ausgebildet ist.

Der Grundgedanke der Erfindung beruht darauf, dass im Unterschied zu tangentialen Abscheidern mit herkömmlichen Saugrohren die Ansaugung der Luft aus dem Luft-Tabakgut-Strom im Abscheider nicht über die gesamte Breite des tangentialen Abscheiders erfolgt. Vielmehr wird die Luft lokalisiert am Lufteintritt der als Rohr oder als Tauchrohr ausgebildeten Luftaustrittsvorrichtung abgesaugt.

Durch die für tangentiale Abscheider typische tangentiale Einleitung des Luft-Tabakgut-Stroms in den im Wesentlichen zylindrisch ausgebildeten Abscheider wird ein Luftwirbel im Abscheider ausgebildet, in dessen Zentrum die Luft abgesaugt wird. Es bildet sich nahe dem Lufteinlass der erfindungsgemäßen Luftaustrittsvorrichtung ein besonders stark heterogenes Strömungsfeld der Luftströmung aus. Das stark heterogene Strömungsfeld zeichnet sich durch enge Kurvenradien der schnellen Luftströmung aus, denen die, im Vergleich zu Luftmolekülen viel schwereren und trägeren, Tabakpartikel und Tabakstaubpartikel nicht zu folgen vermögen. Auf diese Weise wird ein hoher Abscheidungsgrad erreicht.

Dieser Effekt wird noch verstärkt, wenn zwei Luftaustrittsvorrichtungen vorgesehen sind, in denen jeweils Luft abgesaugt wird, die aus gegenüberliegenden Seitenwänden in den Abscheider hineinragen und nur einen, insbesondere schmalen, Schlitz zwischen sich offen lassen. Hierdurch bildet sich ein um die Rotationsachse des im wesentlichen zylindrischen Abscheiders rotierendes Luftströmungsfeld aus, in dem die Luft schnell von den Seitenwänden kommend in einer engen Schraubenbahn um die rohrförmigen Luftaustrittsvorrichtungen in Richtung der Lücke zwischen den Luftaustrittsvorrichtungen bewegt wird. Aus der schnellen Schraubenbahn werden Tabakgutpartikel und Tabakstaubpartikel herausgewirbelt, so dass die abgesaugte Luft größtenteils von Tabakstaub befreit ist.

In typischen Luft-Tabakgut-Abscheidern bewegt sich der tangential eingeleitete Luft-Tabakgut-Strom an der Außenwand des Abscheiders entlang eines Viertel- bis Dreiviertelkreises, bevor das abgetrennte Tabakgut aus einer Austrittsöffnung aus dem Abscheider wieder austritt. In einer vorteilhaften Weiterbildung des erfindungsgemäßen Abscheiders ist deshalb das Ende der wenigstens einen Luftaustrittsvorrichtung zur Ausbildung einer asymmetrischen Luftabsaugung schräg ausgebildet. Die Asymmetrie in der Luftabsaugung kann optimal auf die Asymmetrie des Luft-Tabakgut-Stroms im Abscheider angepasst werden, so dass Luft sehr effizient aus dem Luft-Tabakgut-Strom abgesaugt werden kann.

Um die Verteilung der Luftströme im erfindungsgemäßen Abscheider an die Verteilung des Luft-Tabakgut-Stroms im Abscheider anpassen zu können, ist die wenigstens eine Luftaustrittsvorrichtung vorteilhafterweise um eine Drehachse drehbar gelagert. Weiter vorteilhaft ist ein Antrieb zur Drehung der wenigstens einen Luftaustrittsvorrichtung vorgesehen. Durch die Drehbarkeit der Luftaustrittsvorrichtung oder Luftaustrittsvorrichtungen um eine Drehachse ist es möglich, die Strömungsverhältnisse auf verschiedene Produktionsbedingungen, wie Tabakart, Tabakfluss, Temperatur etc. anzupassen.

Die Luftaustrittsvorrichtung(en) können mittels des Antriebs auch fortlaufend rotieren. Das hat bei schräg angeschnittenen Enden der Luftaustrittsvorrichtung(en) den Vorteil, dass die Ausbildung einer gegebenenfalls ungünstigen stationären Luftströmungsverteilung verhindert wird oder dass durch die Ausbildung einer rotierenden Luftströmungsverteilung ein weiter verbesserter Abscheidungsgrad erreicht wird. Gegebenenfalls kann die Rotationsfrequenz an die Frequenz wiederholter Abläufe in einer nachfolgenden Weiterförderung oder Weiterverarbeitung angepasst sein.

Eine weitere Flexibilisierung des erfindungsgemäßen Abscheiders ist vorteilhaft dann erreicht, wenn die wenigstens eine Luftaustrittsvorrichtung axial verschiebbar ist. Im Falle einer Luftaustrittsvorrichtung ist dann der Absaugpunkt im tangentialen Abscheider veränderbar, wodurch die Luftströmungsverhältnisse an äußere Bedingungen anpassbar sind und insbesondere die Verteilung des Tabakguts an der Austrittsöffnung beeinflusst werden kann.

Im Falle mehrerer Luftaustrittsvorrichtungen ist durch eine axiale Verschiebbarkeit bzw. Verschiebung der Luftaustrittsvorrichtungen die Breite und der Ort der Lücke zwischen den Luftaustrittsvorrichtungen variabel einstellbar. Durch diese Maßnahme sind die Luftströmungsverhältnisse im tangentialen Abscheider flexibel an äußere Bedingungen anpassbar. So kann insbesondere eine homogene Verteilung des Tabakguts im Austritt dadurch erreicht werden, dass neben einer rotierenden Luftströmungskomponente auch eine axiale Luftströmungskomponente auftritt, mittels der das Tabakgut auch in axialer Richtung im tangentialen Abscheider verteilt wird.

Wenn vorteilhaft an der Lufteintrittsöffnung der wenigstens einen Luftaustrittsvorrichtung ein Sieb, ein Gitter und/oder ein Staubfilter vorgesehen ist, ist es möglich, selbst geringe Mengen von angesaugtem Tabakstaub vom Eindringen in die Luftaustrittsvorrichtung abzuhalten, so dass ein nachträgliches Entstauben der abgesaugten Luft unnötig ist.

Insbesondere bei rotierbaren oder axial verschiebbaren Luftaustrittsvorrichtungen ist es von Vorteil, wenn die wenigstens eine Luftaustrittsvorrichtung im Durchtritt in den tangentialen Abscheider mit einer Dichtung abgedichtet ist, um ein Austreten von Luft oder Tabakstaub aus dem Abscheider zu verhindern. Dies geschieht beispielsweise durch Stopfbuchs-Packungen, in denen weiches Material in einen Ringraum des Abscheidergehäuses gestopft und dann axial zusammengepresst wird. Bei axialem Zusammenpressen dehnt sich die ringförmige Packung radial und legt sich dichtend an die Luftaustrittsvorrichtung und die Bohrung der Stopfbuchse an. Stopfbuchs-Packungen bestehen heutzutage aus Aramid, Glasfasern, Polytetrafluorethylen, Graphitfasern oder expandiertem Graphit.

Stoffbuchs-Packungen sind robust und weisen eine moderate Leckrate auf. Für Tabakstaub sind sie undurchlässig. Alternativ können beispielsweise O-Ring-Dichtungen verwendet werden.

Eine bevorzugte Ausbildung des erfindungsgemäßen tangentialen Luft-Tabakstrom Abscheiders besteht darin, dass wenigstens zwei Luftaustrittsvorrichtungen vorgesehen sind. Durch diese Maßnahme ergibt sich eine weitere Flexibilisierung der Einstellbarkeit der Luftströmungsverhältnisse im tangentialen Abscheider und ein hoher Abscheidungsgrad.

Wenn in diesem Fall vorteilhaft zwei Luftaustrittsvorrichtungen längsaxial fluchtend angeordnet sind, ergibt sich im tangentialen Abscheider die Form eines durch eine schlitzartige Lücke durchbrochenen Rohres, wobei die Lücke entweder mittig oder dezentral im Abscheider angeordnet ist. Bei Luftaustrittsvorrichtungen mit geraden Enden verläuft die Lücke gerade. Bei schräg angeordneten Enden verläuft die Lücke bei entsprechender Rotation der beiden Luftaustrittsvorrichtungen entweder schräg bei gleich bleibendem Abstand der Enden (bei einer Verdrehung um 180°), gerade mit wechselndem Abstand der Enden (V-förmig bei einer Verdrehung um 0°), oder aber unregelmäßig (bei einem anderen Verdrehungswinkel).

Die sich im tangentialen Abscheider ausbildenden Strömungsverhältnisse sind in dem Fall, in dem zwei Luftaustrittsvorrichtungen längsaxial fluchtend angeordnet sind, derart, dass die Luft mit dem Tabakgut sich zunächst tangential entlang der äußeren Wand des Abscheiders bewegt. Wegen der Absaugung im Zentrum des Abscheiders kommt an der Außenwand eine längsaxiale Komponente in Richtung der Seitenwände des Abscheiders hinzu. Die als so genannte "Mantelströmung" bezeichnete axiale Komponente der Luftströmung an der im Wesentlichen zylindrischen Außenwand des tangentialen Abscheiders wirkt an einer homogenen Verteilung des Tabakguts in axialer Richtung mit.

An den äußeren Seitenwänden des Abscheiders bewegt sich die Luft mit den leichteren Tabakstaubpartikeln spiralförmig in Richtung auf die Luftaustrittsvorrichtungen zu. Nahe den rohrförmigen Luftaustrittsvorrichtungen bewegt sich die Luft in einer engen und schnellen Schraubenbewegung auf die Lufteinlässe der Luftauslassvorrichtungen zu. Bei dieser schnellen Schraubenbewegung um die rohrförmigen Luftaustrittsvorrichtungen herum werden auch kleine Tabakstaubpartikel durch die Zentrifugalkraft nach außen von den Luftaustrittsvorrichtungen weg geschleudert, so dass die durch die Lücke zwischen den Luftaustrittsvorrichtungen abgesaugte Luft von beinahe sämtlichen Tabakgutpartikeln, auch den Tabakstaubpartikeln, befreit ist.

In einer vorteilhaften Weiterbildung des erfindungsgemäßen tangentialen Abscheiders ist für die wenigstens zwei Luftaustrittsvorrichtungen ein gemeinsames Luftabfuhrsystem vorgesehen. Im gemeinsamen Luftabfuhrsystem werden die Luftströme, die durch die wenigstens zwei Luftaustrittsvorrichtungen abgesaugt wurden, vereinigt und ggf. gemeinsam nachträglich entstaubt. Hierdurch ist eine wesentliche Vereinfachung des Luftabfuhrsystems erreicht.

Wenn zu jeder Luftaustrittsvorrichtung ein Steuerelement zur Steuerung der durch die Luftaustrittsvorrichtungen strömenden Luftströme vorgesehen ist, lassen sich auch bei einem gemeinsamen Luftabfuhrsystem die durch die wenigstens zwei Luftaustrittsvorrichtungen abgesaugten Luftströme unabhängig voneinander einstellen. Hierdurch ist eine weitere Flexibilisierung der Anpassung der Luftströmungsverhältnisse im tangentialen Abscheider an die Verhältnisse, insbesondere Tabakart, Tabakmenge oder Verteilung des Tabaks in der Tabakaustrittsöffnung, erreicht.

Um eine weitere Homogenisierung der Verteilung des Tabakguts im Austritt des tangentialen Abscheiders zu erreichen, ist vorgesehen, dass sich die Breite des tangentialen Abscheiders zur wenigstens einen Austrittsöffnung für das Tabakgut hin verjüngt. Die Verjüngung der Breite des tangentialen Abscheiders hat den weiteren Vorteil, dass eine effektivere Luftabsaugung dadurch möglich ist, dass das Tabakgut auf dem Weg zur Austrittsöffnung im tangentialen Abscheider weiter verdichtet wird. Durch die flexible Einstellbarkeit der Luftströmungsverhältnisse im erfindungsgemäßen tangentialen Abscheider ist es auch möglich, die Homogenität des Tabakguts im Austritt trotz der Verjüngung der Breite des tangentialen Abscheiders zur Austrittsöffnung hin optimal einzustellen.

Wenn die wenigstens eine Austrittsöffnung für das Tabakgut im untersten Punkt des tangentialen Abscheiders angeordnet ist, wirkt vorteilhafterweise die Schwerkraft beim Austritt des Tabakguts aus dem tangentialen Abscheider mit. Hierdurch kann einerseits die volle Wirkung der Luftabsaugung im tangentialen Abscheider eintreten. Andererseits wird eine Rückstauung des Tabakguts auf der ansteigenden Ebene des tangentialen Abscheiders vermieden.

Vorteilhafterweise erstreckt sich die wenigstens eine Austrittsöffnung für das Tabakgut quer zur Tabakförderrichtung. Durch diese Maßnahme ist es erreicht, dass das auf voller Breite des tangentialen Abscheiders geförderte Tabakgut effizient und vollständig aus dem tangentialen Abscheider austreten kann.

Die Breite der wenigstens einen Austrittsöffnung für das Tabakgut entspricht vorteilhafterweise der Breite des tangentialen Abscheiders an der wenigstens einen Austrittsöffnung für das Tabakgut.

Wenn die Breite des tangentialen Abscheiders übergangslos in die Breite der Austrittsöffnung übergeht, wird kein Tabakgut an Vorsprüngen oder sonstigen Hindernissen zurückgehalten. Dies gilt auch für den Fall, dass die Breite des tangentialen Abscheiders zur Austrittsöffnung hin verjüngt ist.

Die Austrittsöffnung des erfindungsgemäßen Luft-Tabakgut-Abscheiders ist vorzugsweise kanalartig ausgebildet. Dies bedeutete, dass die Austrittsöffnung nicht nur eine einfache Öffnung, beispielsweise ein Schälschlitz, in der, insbesondere zylindrischen, Außenwand des tangentialen Abscheiders ist, sondern insbesondere am Ende einer Ausbuchtung des tangentialen Abscheiders in Richtung einer Weiterförderung oder -verarbeitung des Tabakguts angeordnet ist. Die Ausbuchtung kanalisiert die Beförderung des Tabakguts zur Austrittsöffnung. Hierdurch wird vermieden, dass Tabakgut wegen der Trägheit über die Austrittsöffnung hinweg bewegt wird und im tangentialen Abscheider verbleibt. Der Kanal weist insbesondere die gesamte Breite des tangentialen Abscheiders auf. Die Außenwand des tangentialen Abscheiders geht vorteilhaft gleitend in den Kanal bzw. die Ausbuchtung über.

Vorteilhafterweise ist ein Leitblech zur Verhinderung von Verwirbelungen an der Austrittsöffnung für das Tabakgut vorgesehen. Das Leitblech deckt erfindungsgemäß die Ausbuchtung bzw. den Kanal zur Austrittsöffnung für das Tabakgut wenigstens teilweise unter Aussparung einer Öffnung oder Spalte ab, durch die das Tabakgut in Richtung der Austrittsöffnung in die Ausbuchtung bzw. den Kanal und schließlich in die Austrittsöffnung eintritt. Das Leitblech folgt vorteilhafterweise der Außenwand des, insbesondere im Wesentlichen zylindrischen, tangentialen Abscheiders, so dass die Luft, die aus dem Luft-Tabakgut-Strom abgeschieden ist, im tangentialen Abscheider verbleibt und Verwirbelungen am Ort der Austrittsöffnung, die zu einer Inhomogenität in der Verteilung des austretenden Tabakguts führen würde, vermieden werden.

Dies hat den weiteren Vorteil gegenüber Schälschlitzen, dass die Mantelströmung weitgehend erhalten bleibt. Insbesondere bei quer zur Luftströmungsrichtung angeordneten Schälschlitzen, deren stromabwärts gelegene Seite erhaben ist, also in den Abscheider hineinragt, wird die Luft aus der Mantelströmung abgeführt und so die Mantelströmung unterbrochen.

Der erfindungsgemäße tangentiale Abscheider wird vorteilhaft dadurch weitergebildet, dass eine Vorrichtung zum Weitertransport oder zur Weiterverarbeitung des abgetrennten Tabakguts im Anschluss an die Austrittsöffnung für das Tabakgut vorgesehen ist. Durch diese Maßnahme kann das von der Transportluft befreite Tabakgut direkt weiter transportiert oder weiterverarbeitet werden.

Um den tangentialen Abscheider von der nachfolgenden Zigarettenherstellungsmaschine pneumatisch abzuschotten, ist vorteilhaft im Anschluss an die wenigstens eine Austrittsöffnung für das Tabakgut eine Zellenradschleuse vorgesehen. In der Zellenradschleuse werden die Zellen des Zellenrads nacheinander mit Tabakgut aus dem tangentialen Abscheider gefüllt. Wenn eine Zelle vollständig gefüllt ist, wird das Zellenrad um eine Zelle weiterbewegt, bis schließlich die gefüllte Zelle an eine Ausgabeöffnung der Zellenradschleuse gelangt, durch die das Tabakgut aus der Zelle der Zellenradschleuse in eine Vorrichtung zum Weitertransport oder zur Weiterverarbeitung abgegeben wird. Bei drehbaren Luftaustrittsvorrichtungen kann deren Rotationsgeschwindigkeit an die Geschwindigkeit angepasst werden, mit der das Zellenrad der Zellenradschleuse bewegt wird. So kann beispielsweise eine Umdrehung der Luftaustrittsvorrichtung mit der Vorwärtsbewegung des Zellenrads um eine Zelle synchronisiert sein. Die Luftaustrittsvorrichtungen können im selben Zeitraum auch ein ganzzahliges Vielfaches von Umdrehungen ausführen.

Wenn wenigstens eine Zelle der Zellenradschleuse mit Unterdruck beaufschlagbar ist, besteht darin eine vorteilhafte Weiterbildung, da eine Zelle der Zellenradschleuse vor der Beladung mit Tabakgut mit Unterdruck beaufschlagbar ist und bei Öffnung der Zelle zum tangentialen Abscheider hin der Ausgleich des Unterdrucks in der Zelle dazu führt, dass die Zelle besonders effektiv und homogen mit Tabakgut beaufschlagt wird.

In einer vorteilhaften Ausbildung des erfindungsgemäßen tangentialen Abscheiders entspricht die Breite der wenigstens einen Zuleitung für den Luft-Tabakgut-Strom der Breite des tangentialen Abscheiders an der Zuleitung für den Luft-Tabakgut-Strom. Der Luft-Tabakgut-Strom weist durch diese Maßnahme schon bei Eintritt in den tangentialen Abscheider die Breite des tangentialen Abscheiders auf, so dass sowohl eine besonders effektive Luftabsaugung möglich ist, als auch eine homogene Austragung des Tabakguts aus der Austrittsöffnung des erfindungsgemäßen Abscheiders.

Die der Erfindung zugrunde liegende Aufgabe wird auch gelöst durch eine Maschine der Tabak verarbeitenden Industrie, insbesondere Zigarettenherstellungsmaschine, mit einem erfindungsgemäßen tangentialen Abscheider. Außerdem wird die Aufgabe durch eine Tabakaufbereitungsmaschine mit insbesondere einem Stromtrockner gelöst, wobei ein erfindungsgemäßer tangentialer Abscheider vorgesehen ist.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische seitliche Schnittdarstellung durch einen erfindungsgemäßen tangentialen Luft-Tabakgut-Abscheider,
- Fig. 2: eine schematische Darstellung eines erfindungsgemäßen Luft-Tabakgut-Abscheiders in Frontalansicht mit einem Luftabfuhrsystem und
- Fig. 3: eine schematische dreidimensionale Darstellung eines erfindungsgemäßen Luft-Tabakgut-Abscheiders.

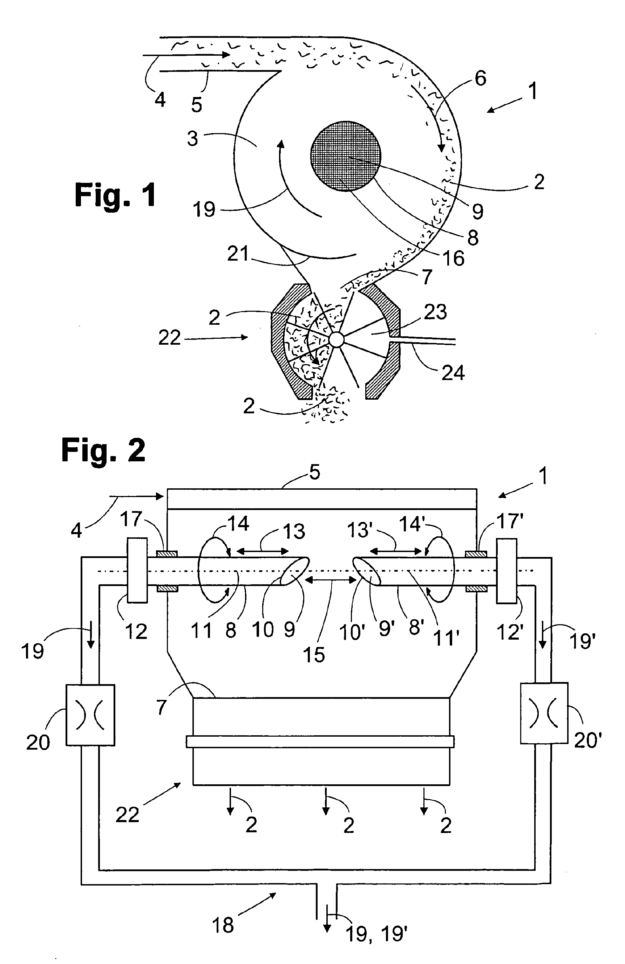

Fig. 1 zeigt eine schematische seitliche Schnittdarstellung durch einen erfindungsgemäßen tangentialen Luft-Tabakgut-Abscheider 1. Ein Luft-Tabakgut-Strom 4 gelangt in Pfeilrichtung durch eine Zuleitung 5 tangential in einen im Wesentlichen zylindrischen tangentialen Abscheider 1. An der Außenwand des tangentialen Abscheiders 1 gleitet der Luft-Tabakgut-Strom 4 bzw. Tabakgut 2 in Förderrichtung 6 in Richtung einer Austrittsöffnung 7 für Tabakgut 2. Im Laufe der Bewegung von der Zuleitung 5 zur Austrittsöffnung 7 wird Luft 3 aus dem Luft-Tabakgut-Strom 4 abgesaugt.

Der tangentiale Abscheider 1 weist eine Ausbuchtung im untersten Punkt zur Kanalisierung des Stroms des Tabakguts 2 in Richtung auf die Austrittsöffnung 7 auf. Die Zylinderform wird fortgesetzt von einem Leitblech 21, so dass die zirkulierende Luft 3 sich im Abscheider 1 in Richtung des Luftstroms 19 weiterbewegt. Das Leitblech 21 kann als Sieb oder Gitter ausgebildet sein. Ferner kann das Leitblech 21 auch entfallen.

Im tangentialen Abscheider 1 ist eine Luftaustrittsvorrichtung 8 in Form eines Tauchrohres mit einer Lufteintrittsöffnung 9 angeordnet, durch die Luft 3 aus dem Abscheider 1 abgesaugt wird. Zur Abweisung von Tabakstaub kann ein feinmaschiges Sieb 16 und/oder ein Staubfilter auf der Lufteintrittsöffnung 9 vorgesehen sein. Durch die Anordnung der Luftaustrittsvorrichtung 8 zentral im Abscheider 1 bildet sich eine wirbelförmige Luftströmung 19 aus, die dazu führt, dass feine Tabakstaubpartikel durch die Zentrifugalkraft nach außen gedrängt werden und sich mit dem Luft-Tabakgut-Strom 4 bzw. dem Tabakgut 2 an der Außenwand des Abscheiders 1 wieder vereinigen, so dass die durch die Luftaustrittsvorrichtung 8 abgesaugte Luft 3 weitestgehend von Tabakgut 2 und Tabakstaub befreit ist.

Im Anschluss an die Austrittsöffnung 7 für das Tabakgut 2 des tangentialen Abscheiders 1 ist eine Zellenradschleuse 22 mit Zellen 23 vorgesehen, in die das Tabakgut 2 gefüllt wird. Die Zellenradschleuse dreht sich in Pfeilrichtung zu einem Ausgang, aus dem das Tabakgut 2 zur Weiterförderung oder Weiterbearbeitung auf eine nicht dargestellte Vorrichtung abgegeben wird. Nach der Abgabe des Tabakguts 2 und vor der Aufnahme neuen Tabakguts 2 aus der Austrittsöffnung 7 des tangentialen Abscheiders 1 werden Zellen 23 über eine Unterdruckzuführung 24 mit Unterdruck beaufschlagt, so dass an der Austrittsöffnung 7 die Beladung der Zelle 23 mit Tabakgut 2 unterstützt wird.

In Fig. 2 ist eine schematische Darstellung eines erfindungsgemäßen Luft-Tabakgut-Abscheiders 1 in einer Frontalansicht im Schnitt gezeigt. Durch eine Zuleitung 5 wird der Luft-Tabakgut-Strom 4 in den Abscheider 1 tangential eingeleitet. Die Breite des Abscheiders 1 verjüngt sich an der Unterseite zur Austrittsöffnung 7 für das Tabakgut 2 hin. An die Austrittsöffnung 7 für das Tabakgut 2 schließt sich eine Zellenradschleuse 22 an, durch die das von Luft 3 abgetrennte Tabakgut 2 weitergefördert wird.

Ebenfalls dargestellt sind zwei tauchrohrartige Luftaustrittsvorrichtungen 8, 8' mit abgeschrägten Enden 10, 10' und ovalen Lufteintrittsöffnungen 9, 9'. Die Luftaustrittsvorrichtungen 8, 8' sind in den Seitenwänden des tangentialen Abscheiders 1 drehbar und axial verschiebbar gelagert. Die Durchbruchstellen sind mit Dichtungen 17, 17' abgedichtet. Die Möglichkeit der axialen Verschiebung und die Verdrehung der Luftaustrittsvorrichtungen 8, 8' sind durch Pfeile 13, 13', 14, 14' symbolisiert. Die Drehung der Luftaustrittsvorrichtungen 8, 8' erfolgt um Drehachsen 11, 11', die im Beispiel gem. Fig. 2 kolinear sind. Durch die axiale Verschiebung 13, 13' und Verdrehung 14, 14' der Luftaustrittsvorrichtungen 8, 8' ist auch die Breite und Form der Lücke 15 zwischen den Luftaustrittsvorrichtungen 8, 8' einstellbar. Für die Bewegungen 13, 13', 14, 14' der Luftaustrittsvorrichtungen 8, 8' sind Antriebseinheiten 12, 12' vorgesehen.

In den auf die Luftaustrittsvorrichtungen 8, 8' folgenden Leitungen des Luftabfuhrsystems 18 sind Steuerelemente 20, 20' angeordnet, mit denen die Menge der abgesaugten Luft durch die Luftaustrittsvorrichtungen 8, 8' individuell einstellbar sind. Die Luftströme 19, 19' durch die Luftaustrittsvorrichtungen 8, 8' werden im gemeinsamen Luftabführsystem 18 zusammengeführt und abgeführt.

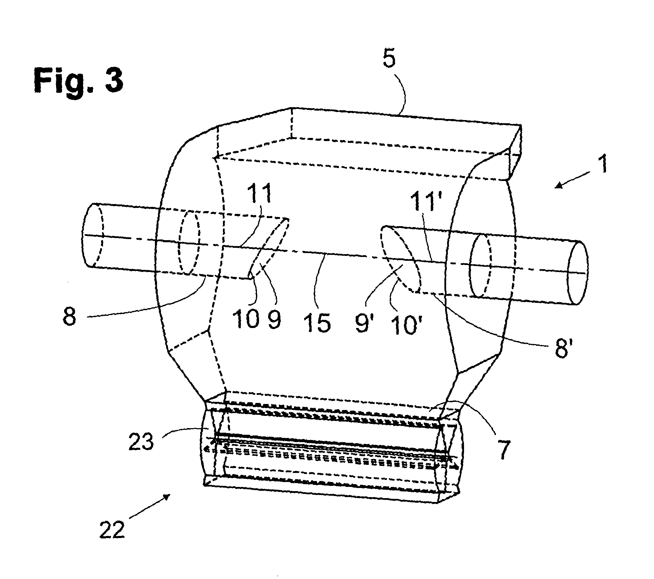

In Fig. 3 ist eine schematische dreidimensionale Darstellung eines erfindungsgemäßen Luft-Tabakgut-Abscheiders 1 mit einer Zellenradschleuse 22 dargestellt. Erkennbar ist ein im Wesentlichen zylindrischer Grundkörper des Abscheiders 1, der sich in Richtung der Zellenradschleuse 22 mit Zellen 23 hin verjüngt, und zwar sowohl in der Breite als auch in der Tiefe. Hierdurch wird die Bewegung des Tabakstroms 2 auf die Austrittsöffnung 7 zu kanalisiert. Die Austrittsöffnung 7 für das Tabakgut 2 ist der Übergang aus dem tangentialen Abscheider 1 in die Zellenradschleuse 22.

Im in Fig. 3 gezeigten Ausführungsbeispiel ist die Zuleitung 5 für den Luft-Tabakgut-Strom 4 so ausgeführt, dass sich die Breite der Zuleitung 5 in Richtung auf den tangentialen Abscheider 1 verbreitert. Ebenfalls dargestellt sind Luftaustrittsvorrichtungen 8, 8' mit schräg ausgeführten Enden 10, 10', wobei die Lufteintrittsöffnungen 9, 9' der Luftaustrittsvorrichtungen 8, 8' elliptisch dargestellt sind.

Die Luftaustrittsvorrichtungen 8, 8' treten durch die Seitenwände der im Wesentlichen zylindrischen Kammer des tangentialen Abscheiders 1 aus. Im Durchtrittspunkt können Dichtungen 17, 17' vorgesehen sein, beispielsweise Stopfbuchs-Packungen.

Die Luftaustrittsvorrichtungen 8, 8' sind um eine gemeinsame Drehachse 11, 11' unabhängig voneinander drehbar. Zwischen den Luftaustrittsvorrichtungen 8, 8' befindet sich eine Lücke 15, deren Breite einstellbar ist, wenn die Luftaustrittsvorrichtungen 8, 8' axial verschiebbar sind.

Die rohrförmigen Luftaustrittsvorrichtungen 8, 8' bilden mit ihren vielen Freiheitsgraden ein flexibel einstellbares Luftabsaugsystem, mit dem die Luftströmungsverhältnisse im tangentialen Abscheider 1 auf sich ändernde äußere Verhältnisse, wie Tabakart, Tabakmenge, Temperatur, flexibel und präzise einstellbar sind. Dadurch ist ein hoher Abscheidegrad und eine gute Homogenität des ausgetragenen Tabakguts 2 erreichbar. Durch das sich im tangentialen Abscheider 1 ausbildende Wirbelfeld der Luftströmungen, die am Ort der Luftaustrittsvorrichtungen 8, 8' sich schnell in einer spiralförmigen Bewegung von den Seitenwänden hin zur Lücke 15 zwischen den Luftaustrittsvorrichtungen 8, 8' bewegt, wird die abgesaugte Luft 3 sehr effektiv auch von den kleinsten Tabakstaubteilchen befreit, so dass eine Nachreinigung oder der Einsatz von Sieben zur Reinigung der abgesaugten Luft im Allgemeinen nicht nötig ist.

### Bezugszeichenliste

- 1: Tangentialer Abscheider
- 2: Tabakgut
- 3: Luft
- 4: Luft-Tabakgut-Strom
- 5: Zuleitung für Luft-Tabakgut-Strom
- 6: Förderrichtung
- 7: Austrittsöffnung für Tabakgut
- 8, 8': Luftaustrittsvorrichtung
- 9, 9': Lufteintrittsöffnung
- 10, 10': Ende der Luftaustrittsvorrichtung
- 11, 11': Drehachse der Luftaustrittsvorrichtung
- 12, 12': Antriebseinheit
- 13, 13': Axiale Verschiebung der Luftaustrittsvorrichtung
- 14, 14': Verdrehung der Luftaustrittsvorrichtung
- 15: Lücke zwischen den Luftaustrittsvorrichtungen
- 16: Sieb
- 17, 17': Dichtung
- 18: Luftabfuhrsystem
- 19, 19': Luftstrom
- 20, 20': Steuerelement
- 21: Leitblech
- 22: Zellenradschleuse
- 23: Zelle
- 24: Unterdruckzuführung

## Patentansprüche

1. Tangentialer Luft-Tabakgut-Abscheider (1), umfassend wenigstens eine Zuleitung (5) für einen Luft-Tabakgut-Strom (4), wenigstens eine Austrittsöffnung (7) für das abgetrennte Tabakgut (2) und wenigstens eine Luftaustrittsvorrichtung (8, 8'), **dadurch gekennzeichnet, dass** die wenigstens eine Luftaustrittsvorrichtung (8, 8') als in den tangentialen Abscheider (1) hinein ragendes und im tangentialen Abscheider (1) endendes Rohr ausgebildet ist.

2. Tangentialer Abscheider (1) nach Anspruch 1, **dadurch gekennzeichnet, dass** das Ende (10, 10') der wenigstens einen Luftaustrittsvorrichtung (8, 8') zur Ausbildung einer asymmetrischen Luftabsaugung schräg ausgebildet ist.

3. Tangentialer Abscheider (1) nach einem der Ansprüche 1 oder 2, **dadurch gekennzeichnet, dass** die wenigstens eine Luftaustrittsvorrichtung (8, 8') um eine Drehachse (11, 11') drehbar gelagert ist.

4. Tangentialer Abscheider (1) nach Anspruch 3, **dadurch gekennzeichnet, dass** ein Antrieb (12, 12') zur Drehung der wenigstens einen Luftaustrittsvorrichtung (8, 8') vorgesehen ist.

5. Tangentialer Abscheider (1) nach einem oder mehreren der Ansprüche 1 bis 4, **dadurch gekennzeichnet, dass** die wenigstens eine Luftaustrittsvorrichtung (8, 8') axial verschiebbar ist.

6. Tangentialer Abscheider (1) nach einem oder mehreren der Ansprüche 1 bis 5, **dadurch gekennzeichnet, dass** an der Lufteintrittsöffnung (9, 9') der wenigstens einen Luftaustrittsvorrichtung (8, 8') ein Sieb (16), ein Gitter und/oder ein Staubfilter vorgesehen ist.

7. Tangentialer Abscheider (1) nach einem oder mehreren der Ansprüche 1 bis 6, **dadurch gekennzeichnet, dass** die wenigstens eine Luftaustrittsvorrichtung (8, 8') im Durchtritt in den tangentialen Abscheider (1) mit einer Dichtung (17, 17') abgedichtet ist.

8. Tangentialer Abscheider (1) nach einem oder mehreren der Ansprüche 1 bis 7, **dadurch gekennzeichnet, dass** wenigstens zwei Luftaustrittsvorrichtungen (8, 8') vorgesehen sind.

9. Tangentialer Abscheider (1) nach Anspruch 8, **dadurch gekennzeichnet, dass** zwei Luftaustrittsvorrichtungen (8, 8') längsaxial fluchtend angeordnet sind.

10. Tangentialer Abscheider (1) nach Anspruch 8 oder 9, **dadurch gekennzeichnet, dass** für die wenigstens zwei Luftaustrittsvorrichtungen (8, 8') ein gemeinsames Luftabfuhrsystem (18) vorgesehen ist.

11. Tangentialer Abscheider (1) nach Anspruch 10, **dadurch gekennzeichnet, dass** zu jeder Luftaustrittsvorrichtung (8, 8') ein Steuerelement (20, 20') zur Steuerung der durch die Luftaustrittsvorrichtungen (8, 8') strömenden Luftströme (19, 19') vorgesehen ist.

12. Tangentialer Abscheider (1) nach einem oder mehreren der Ansprüche 1 bis 11, **dadurch gekennzeichnet, dass** sich die Breite des tangentialen Abscheiders (1) zur wenigstens einen Austrittsöffnung (7) für das Tabakgut (2) hin verjüngt.

13. Tangentialer Abscheider (1) nach einem oder mehreren der Ansprüche 1 bis 12, **dadurch gekennzeichnet, dass** die wenigstens eine Austrittsöffnung (7) für das Tabakgut (2) im untersten Punkt des tangentialen Abscheiders (1) angeordnet ist.

14. Tangentialer Abscheider (1) nach einem oder mehreren der Ansprüche 1 bis 13, **dadurch gekennzeichnet, dass** sich die wenigstens eine Austrittsöffnung (7) für das Tabakgut (2) quer zur Tabakförderrichtung (6) erstreckt.

15. Tangentialer Abscheider (1) nach einem oder mehreren der Ansprüche 1 bis 14, **dadurch gekennzeichnet, dass** die Breite der wenigstens einen Austrittsöffnung (7) für das Tabakgut (2) der Breite des tangentialen Abscheiders (1) an der wenigstens einen Austrittsöffnung (7) für das Tabakgut (2) entspricht.

16. Tangentialer Abscheider (1) nach einem oder mehreren der Ansprüche 1 bis 15, **dadurch gekennzeichnet, dass** ein Leitblech (21) zur Verhinderung von Verwirbelungen an der Austrittsöffnung (7) für das Tabakgut (2) vorgesehen ist.

17. Tangentialer Abscheider (1) nach einem oder mehreren der Ansprüche 1 bis 15, **dadurch gekennzeichnet, dass** eine Vorrichtung zum Weitertransport oder zur Weiterverarbeitung des abgetrennten Tabakguts (2) im Anschluss an die Austrittsöffnung (7) für das Tabakgut (2) vorgesehen ist.

18. Tangentialer Abscheider (1) nach Anspruch 17, **dadurch gekennzeichnet, dass** im Anschluss an die wenigstens eine Austrittsöffnung (7) für das Tabakgut (2) eine Zellenradschleuse (22) vorgesehen ist.

19. Tangentialer Abscheider (1) nach Anspruch 18, **dadurch gekennzeichnet, dass** wenigstens eine Zelle (23) der Zellenradschleuse (22) mit Unterdruck beaufschlagbar ist.

20. Tangentialer Abscheider (1) nach einem oder mehreren der Ansprüche 1 bis 19, **dadurch gekennzeichnet, dass** die Breite der wenigstens einen Zuleitung (5) für den Luft-Tabakgut-Strom (4) der Breite des tangentialen Abscheiders (1) an der Zuleitung (5) für den Luft-Tabakgut-Strom (4) entspricht.

21. Maschine der Tabak verarbeitenden Industrie, insbesondere Zigarettenherstellungsmaschine, mit einem tangentialen Abscheider (1) nach einem oder mehreren der Ansprüche 1 bis 20.

22. Tabakaufbereitungsmaschine mit insbesondere einem Stromtrockner und einem tangentialen Abscheider (1) nach einem oder mehreren der Ansprüche 1 bis 20.
